**Europäisches Patentamt**

**European Patent Office**

**Office européen des brevets**

(19)

(11) Veröffentlichungsnummer : **0 407 885 B1**

(12) # EUROPÄISCHE PATENTSCHRIFT

(45) Veröffentlichungstag der Patentschrift :
**10.11.93 Patentblatt 93/45**

(51) Int. Cl.$^5$ : **B27L 11/02**

(21) Anmeldenummer : **90112812.4**

(22) Anmeldetag : **05.07.90**

(54) **Beschickvorrichtung für Holzzerspanungsmaschinen.**

(30) Priorität : **14.07.89 DE 3923264**

(43) Veröffentlichungstag der Anmeldung :
**16.01.91 Patentblatt 91/03**

(45) Bekanntmachung des Hinweises auf die
Patenterteilung :
**10.11.93 Patentblatt 93/45**

(84) Benannte Vertragsstaaten :
**ES FR IT SE**

(56) Entgegenhaltungen :
**BE-A- 648 105
DE-A- 2 213 618
DE-A- 3 611 866**

(73) Patentinhaber : **PALLMANN
MASCHINENFABRIK GMBH + CO. KG
Wolfslochstrasse 51 Postfach 16 52
D-66466 Zweibrücken (DE)**

(72) Erfinder : **Pallmann, Wilhelm
Kreuzbergstrasse 45b
D-6660 Zweibrücken (DE)**

**Beschreibung**

Die Erfindung betrifft eine Vorrichtung zum kontinuierlichen Beschicken von Zerspanmaschinen mit Stückholz, insbesondere mit Rundholz, dessen im wesentlichen einheitliche Länge etwa 2,50 m beträgt. Diese nahezu gleichmäßige Länge der Hölzer ist meist durch die zulässige Ladebreite der Transportfahrzeuge bedingt; sie kann aber auch, insbesondere bei Hölzern, die aus Dauerfrostgebieten kommen, durch die Abmessungen der Auftaubecken vorgegeben sein.

Für die rationelle Erzeugung eines qualitativ hochwertigen, homogenen Spangutes, wie es für die unmittelbare industrielle Weiterverarbeitung zu anspruchsvollen Zwischenprodukten, wie Spanplatten oder Spanprofilen, benötigt wird, ist es erforderlich, daß die Hölzer in Form von zerspanungsgerecht, also parallel zueinander ausgerichteten Holzstapeln der Zerspankammer von Zerspanmaschinen in gleichmäßigen, ununterbrochenen Taktfolgen zur abschnittsweisen, faserparallelen Zerspanung zugeführt werden. Dabei muß die Länge der einzelnen Zerspanungsabschnitte auf die Arbeitsbreite der Zerspanmaschine derart abgestimmt sein, daß bei optimalem Füllungsgrad der Zerspankammer keine kurzen Restabschnitte entstehen können. Solche meist scheibenförmigen Restabschnitte geraten in der Zerspankammer in unkontrollierte, also nicht mehr faserparallel zu den Messerschneiden ausgerichtete Lagen, was nicht nur einen wirtschaftlich untragbaren hohen Feingutanteil im Spangut ergibt, sondern auch starke Schwankungen des Strombedarfs der Zerspanmaschinen sowie einen raschen Verschleiß der Zerspanmesser zur Folge hat. Aus diesen wirtschaftlichen Gesichtspunkten ist es daher eine vorrangige technologische Forderung, Beschickvorrichtungen für Zerspanmaschinen derart zu gestalten und zu betreiben, daß die Entstehung von solchen Restabschnitten ausgeschlossen ist.

In der DE-PS 36 11 866 (US-PS 4 784 198) ist eine Beschickvorrichtung beschrieben, die diese technologische Bedingung bereits weitgehend befriedigt. Sie besteht im wesentlichen aus einem in die Zerspankammer von Zerspanmaschinen mündenden Rinnentrog, oberhalb dem ein Lademagazin angeordnet ist. In diesem werden die mittels eines Querförderers zugeführten Hölzer jeweils zu einem zerspanungsgerecht ausgerichteten Holzstapel formiert. Nach Öffnen des von zwei Schwenkklappen gebildeten V-förmigen Magazinbodens fällt der kompakte Holzstapel dann in den Rinnentrog, wo er von einer taktweise längs bewegten Schubplatte in gleichmäßigen, auf die Arbeitsbreite des Messerrotors abgestimmten Abschnitten in die Zerspankammer geschoben wird.

Diese bekannte Beschickvorrichtung hat indes den Nachteil, daß sie wegen der Anordnung des Lademagazins oberhalb des Rinnentroges eine große Bauhöhe aufweist, die ihre Aufstellung in bestehenden Industriehallen erschwert oder gar unmöglich macht. Außerdem besteht, nachdem der Holzstapel aus dem Lademagazin in den Rinnentrog gefallen ist, keine Einflußmöglichkeit mehr, um die Lage der Hölzer hinsichtlich ihrer parallelen Ausrichtung zu korrigieren.

Es sind daher auch schon zwei Beschickvorrichtungen bekanntgeworden, bei denen das Lademagazin höhengleich hinter dem Rinnentrog der Beschickstation angeordnet ist. Hierbei ergibt sich aber das Problem, daß der im Lademagazin für die nächste Zerspanungsphase schon wieder bereitgestellte Holzstapel die Schubplatte an ihrer Rückkehr in ihre Startposition hinter diesen vorbereiteten Holzstapel hindert.

Bei der einen der beiden bekanntgewordenen Beschickvorrichtungen wurde diesem Problem dadurch ausgewichen, daß das Lademagazin seitlich in eine Befüllposition verfahrbar ist, wobei das Magazin im befüllten Zustand erst dann hinter den Rinnentrog der Beschickstation geschoben wird, nachdem die Schubplatte bereits wieder ihre Startposition eingenommen hat, so daß sie den Holzstapel aus dem Lademagazin in den nunmehr damit fluchtenden Rinnentrog ausschieben und dann weiter taktweise in die Zerspankammer einschieben kann.

Bei der anderen bekanntgewordenen Beschickvorrichtung wurde das besagte Problem dadurch umgangen, daß sowohl der Rinnentrog der Beschickstation als auch das dahinter ortsfest angeordnete Lademagazin mit je einer gesonderten Schubplatte ausgerüstet wurde. Dabei befördert die dem Lademagazin zugeordnete Schubplatte den vorbereiteten Holzstapel in den Rinnentrog der Beschickstation, wofür dessen Schubplatte durch zwangsgesteuertes Hochschwenken in Warteposition die Passage in den Rinnentrog freigibt, um anschließend dann das taktweise Einschieben des Holzstapels in die Zerspankammer der Zerspanmaschine zu übernehmen.

Beiden bekanntgewordenen Beschickvorrichtungen mit höhengleich hinter dem Rinnentrog der Beschickstation angeordnetem Lademagazin ist somit der Nachteil gemeinsam, daß gesonderte, vom eigentlichen Beschickmechanismus unabhängige Fördereinrichtungen mit eigenen Antriebs- und Steuersystemen benötigt werden, um den im Lademagazin vorbereiteten Holzstapel erst einmal in den Rinnentrog der Beschickstation zu befördern. Das bedingt nicht nur einen höheren Installationsaufwand, sondern erhöht auch die Störanfälligkeit der gesamten Beschickanlage, insbesondere durch Verschleiß und Verschmutzung bei den dort benötigten Zwangssteuerungen. Zudem ergeben sich infolge der voneinander unabhängigen Antriebs- und Steuersysteme zusätzliche Totzeiten, die einem ununterbrochenen Arbeitsrhythmus der Zerspanmaschine abträglich sind.

Der Erfindung liegt daher die Aufgabe zugrunde, Beschickvorrichtungen mit höhengleich hinter dem Rinnentrog der Beschickstation ortsfest angeordnetem Lademagazin in der Weise zu gestalten, daß für Rinnentrog und Lademagazin nur eine einzige Fördereinrichtung benötigt wird, deren von einem einzigen Antriebssystem abhängiger Funktionsablauf ohne Zwangssteuerung auskommt und einen gleichmäßigen, ununterbrochenen Arbeitsrhythmus ohne Totzeiten der Zerspanmaschine ermöglicht. Dabei soll die eingangs erwähnte obligate Forderung der Vermeidung von Restabschnitten uneingeschränkt gewährleistet bleiben.

Diese Aufgabe wird ausgehend von dem im Anspruch 1 umrissenen Stand der Technik erfindungsgemäß im wesentlichen durch die dort gekennzeichneten Maßnahmen gelöst. Infolge der schwenkbaren Lagerung der Schubplatte auf einem unmittelbar über dem Rinnentrog und dem Lademagazin bodenparallel hin- und herbewegbaren Support kann die Schubplatte bei ihrem Rücklauf soweit hochgeschwenkt werden, daß sie über den im Lademagazin für die nächste Zerspanphase bereitgestellten Holzstapel anstandslos hinwegbewegt und dahinter wieder in ihre Schubposition zurückgeschwenkt werden kann. Dabei werden für die erforderlichen Schwenkbewegungen nur kurzzeitige Steuerimpulse am Anfang und Ende des Rücklaufes benötigt, so daß es, wie aufgabegemäß angestrebt, keiner verschleißträchtigen Zwangssteuerung bedarf.

Außerdem wirkt die Schubplatte bzw. ihr Support infolge der bodenparallelen Rückführung unmittelbar über Rinnentrog und Lademagazin zusätzlich als Störmelder in den Fällen, in denen im Lademagazin die zulässige Höhe des Holzstapels versehentlich überschritten ist. Die dadurch verursachte Unterbrechung der Rücklaufbewegung löst sofort Störalarm aus, der den Antrieb der Beschickvorrichtung ausschaltet und dadurch dem Wartungspersonal Gelegenheit gibt, die Stapelhöhe rechtzeitig, also noch vor Beginn des Einschubvorganges, zu korrigieren.

In der allgemeinen Fördertechnik ist es, wie durch die belgische Patentschrift 648 105 belegt, bei Kratzförderern zwar bereits bekannt, das Schuborgan ebenfalls auf einem oberhalb einer Förderrinne hin- und herbewegbaren Support schwenkbar zu lagern, doch erfolgt dort die Steuerung des Schuborgans während ihrer Arbeits- und Rücklaufphase mittels zweier, übereinander angeordneter, an ihrem Anfang und Ende umsteuerbarer Zwangsführungen. Im Unterschied dazu ist erfindungsgemäß die Schubplatte bistabil auf dem hin- und herbewegbaren Support schwenkbar gelagert, so daß auf verschleißträchtige Zwangsführungen völlig verzichtet werden kann und es am Anfang und Ende der Laufstrecke nur einfacher, kurzzeitiger Impulsgeber bedarf, um die Schubplatte jeweils in ihre über die gesamte Laufstrecke hinweg autogen-stabile Arbeits- bzw. Rücklaufstellung zu bewegen.

Weitere vorteilhafte Ausgestaltungsmöglichkeiten der Erfindung ergeben sich aus den Unteransprüchen.

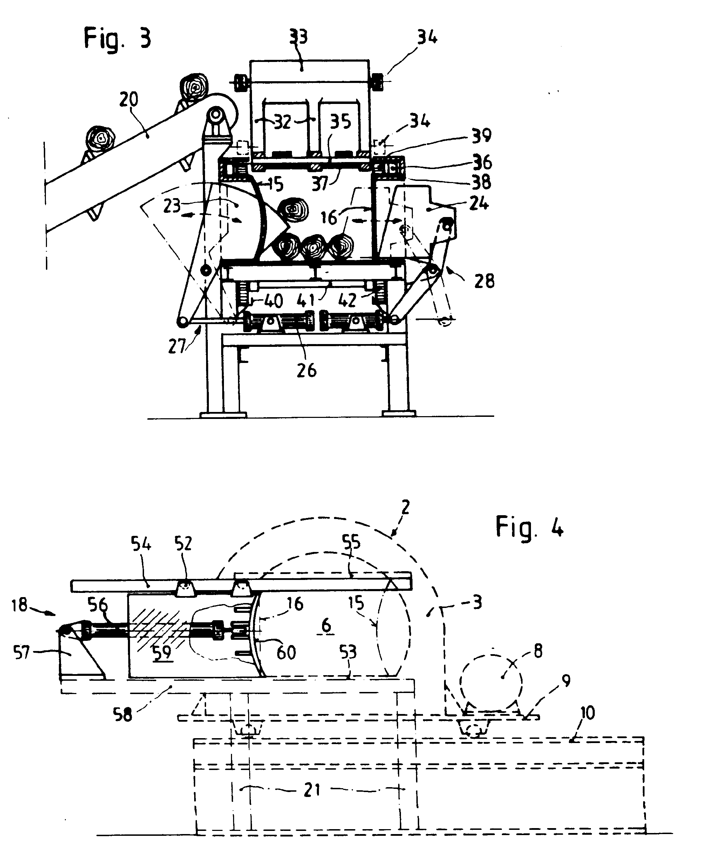

Die im Anspruch 2 vorgeschlagene Anordnung der Schubplatte am einen Ende eines zweiarmigen Hebelsystems, an dessen anderen Armen ein Gegengewicht sowie die mit stationären Steuerbahnen kurzzeitig zusammenwirkenden Steuerglieder angebracht sind, minimiert nicht nur die für die Schwenkbewegungen der Schubplatte benötigten Steuerimpulse; sie ermöglicht auch den während der Bewegungsabläufe größtenteils außer Funktion befindlichen Steuergliedern das ungehinderte Passieren des in das Lademagazin ausmündenden Querförderers, und zwar, wie insbesondere aus Fig. 3 hervorgeht, in Arbeitsstellung der Schubplatte oberhalb und in Rücklaufstellung unterhalb davon. Zudem kann durch entsprechende Gestaltung der stationären Steuerbahnen Dauer und Intensität der Steuerimpulse optimal aufeinander abgestimmt werden.

Besonders gering sind die für die Schwenkbewegungen der Schubplatte erforderlichen Steuerimpulse dann, wenn gemäß Anspruch 3 Masse und Anordnung von Schubplatte und Gegengewicht derart aufeinander abgestimmt sind, daß das zweiarmige Hebelsystem in der Mittellage seines Schwenkbereiches sich im labilen Gleichgewicht befindet. Das ist dann der Fall, wenn der Gesamtschwerpunkt (Massenmittelpunkt) S des Hebelsystems in der Mittellage seines Schwenkwinkels $\alpha$ sich genau senkrecht über der Schwenkachse befindet. Wie in Fig. 5 veranschaulicht, braucht zur jeweiligen Umsteuerung der Schubplatte aus ihrer Schubstellung A in ihre Rücklaufstellung B und umgekehrt dann nur die im Schwerpunkt S vereinigt gedachte Gesamtmasse des Hebelsystems um den Betrage $\Delta h$ angehoben zu werden, wonach die Schubplatte dann von selbst in ihre jeweils andere stabile Lage A oder B kippt. In diesen Lagen A bzw. B verbleibt sie dann mit einer der Höhendifferenz $\Delta h$ entsprechenden Eigenstabilität während des größten Teils ihrer Bewegungsbahnen bis zum Wirksamwerden des nächsten Steuerimpulses. Durch geeignete Wahl des Abstandes a des Schwerpunktes S von der Schwenkachse des zweiarmigen Hebelsystems hat es demnach der Konstrukteur in der Hand, die für die Umsteuerung der Schubplatte jeweils benötigten Steuerimpulse und ihre Stabilität in den beiden Endlagen A und B optimal aufeinander abzustimmen.

Die im Anspruch 5 vorgeschlagene Anordnung der im Mündungsbereich des Rinnentroges vorgesehenen Steuerbahn an der Unterseite einer schwenkbar gelagerten, unter Wirkung einer Rückstellkraft stehenden Steuerzunge ermöglicht dem Steuerglied der Schubplatte das ungehinderte Passieren dieser stationären Steuerbahn bei der Einschubbewegung.

EP 0 407 885 B1

Eine besonders schonende Umsteuerung der Schubplatte ist dann gewährleistet, wenn ihr Steuerglied, wie im Anspruch 6 vorgeschlagen, aus einer Rolle besteht, die seitlich am Gegengewicht angeordnet ist.

Die im Anspruch 7 empfohlene Führung des Supports in beidseits des Rinnentroges und des Lademagazins durchgehend vorgesehenen Führungsrillen, die auch die Kettenzüge für seine Hin- und Herbewegung aufnehmen, ermöglicht zudem eine weitgehend schmutz und verschleißgeschützte Unterbringung seiner Führungs- und Antriebselemente.

Der gemäß den Ansprüchen 8 bis 10 zwischen dem Mündungsende des Rinnentroges und der Zerspankammer einschiebbare Verschlußschieber dient dem Zweck, die beiden in die Aufgaben stellung integrierten generellen Forderungen zu befriedigen, nämlich zum einen das Entstehen von Restabschnitten zu vermeiden und zum anderen einen ununterbrochenen, also totzeitlosen Arbeitsrhythmus der Zerspanmaschine zu gewährleisten. Da Restabschnitte u.a. auch dadurch entstehen können, daß beim jeweils letzten Zerspanungstakt eines Holzstapels bei offener Zerspankammer einzelne Hölzer teilweise in den Rinnentrogzurückgedrückt werden, ist es notwendig, die Zerspankammer während des letzten Zerspantaktes zu verschließen. Das könnte im Prinzip zwar auch durch Belassen der Schubplatte in ihrer Endstellung geschehen, doch würde hierfür eine beträchtliche Zeitspanne benötigt, die mit der anderen obligaten Forderung des gleichmäßigen, totzeitlosen Arbeitsrhythmus der Zerspanmaschine unvereinbar wäre. Der gemäß Anspruch 8 vorgeschlagene Verschlußschieber ermöglicht somit das sofortige Zurückfahren der Schubplatte, nachdem diese den letzten Abschnitt eines Holzstapels in die Zerspankammer eingeschoben hat.

Darüber hinaus dient der Verschlußschieber während der Zerspanung der vorhergehenden Abschnitte als zusätzliches Druckelement, das im Zusammenwirken mit der gegenüberliegenden Wand des Rinnentroges die Hölzer in unmittelbarer Nähe des Messerrotors zusätzlich festhält.

Schließlich wirkt der Verschlußschieber in seiner Schließstellung auch als Anschlagplatte für einen soeben in den Rinnentrog neu eingeschobenen Holzstapel, womit er die Startposition für die Schubplatte markiert, von der aus nach Öffnen des Verschlußschiebers der taktweise Vorschub des Holzstapels in gleichmäßigen, definierten Abschnitten in die inzwischen in ihre Beschickposition zurückgefahrene Zerspankammer beginnt. Diese Anschlagfunktion des Verschlußschiebers kann aber auch dazu benutzt werden, bei Hölzern mit sehr unterschiedlichen Abmessungen die maximale Länge eines Holzstapels zu ermitteln, um danach die gleichmäßige Länge der einzelnen Vorschubtakte festzulegen, wie das in der DE-PS 36 11 866 (US-PS 4 784 198) im einzelnen bereits erläutert ist.

In den Zeichnungen ist ein bevorzugtes Ausführungsbeispiel der Erfindung dargestellt. Es zeigt:

Fig. 1    einen Längsschnitt durch die Beschickvorrichtung gemäß Linie I-I in Fig. 2;
Fig. 2    eine Draufsicht auf die Beschickvorrichtung;
Fig. 3    einen Querschnitt durch die Beschickvorrichtung gemäß Linie III-III in Fig. 2;
Fig. 4    eine Schnittansicht nach der Linie IV-IV in Fig.2;
Fig. 5    das kinematische Wirkungsprinzip der Umsteuerung für die Schubplatte.

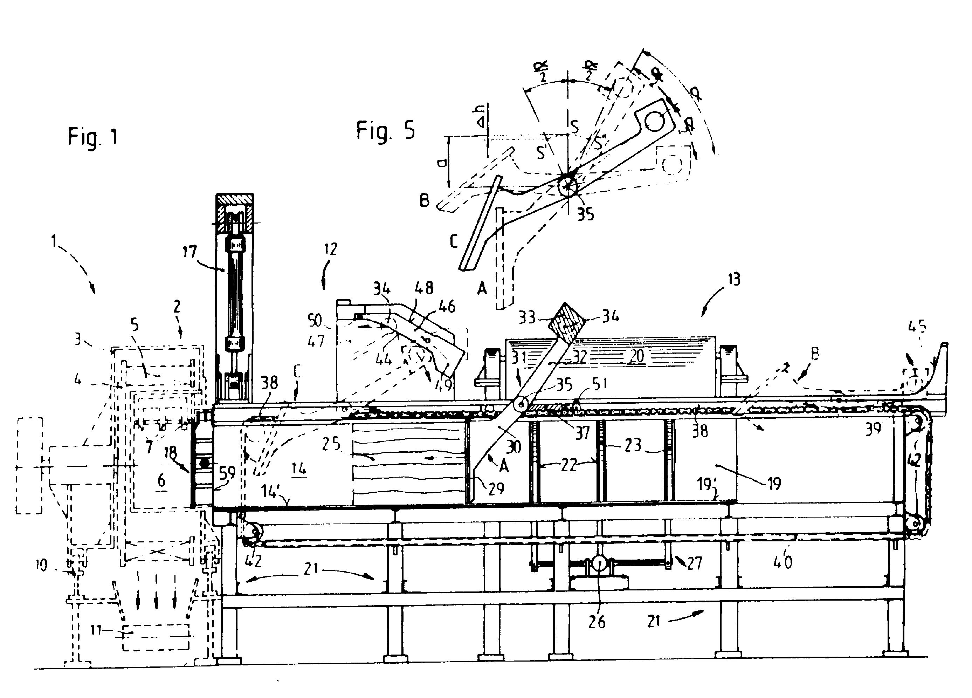

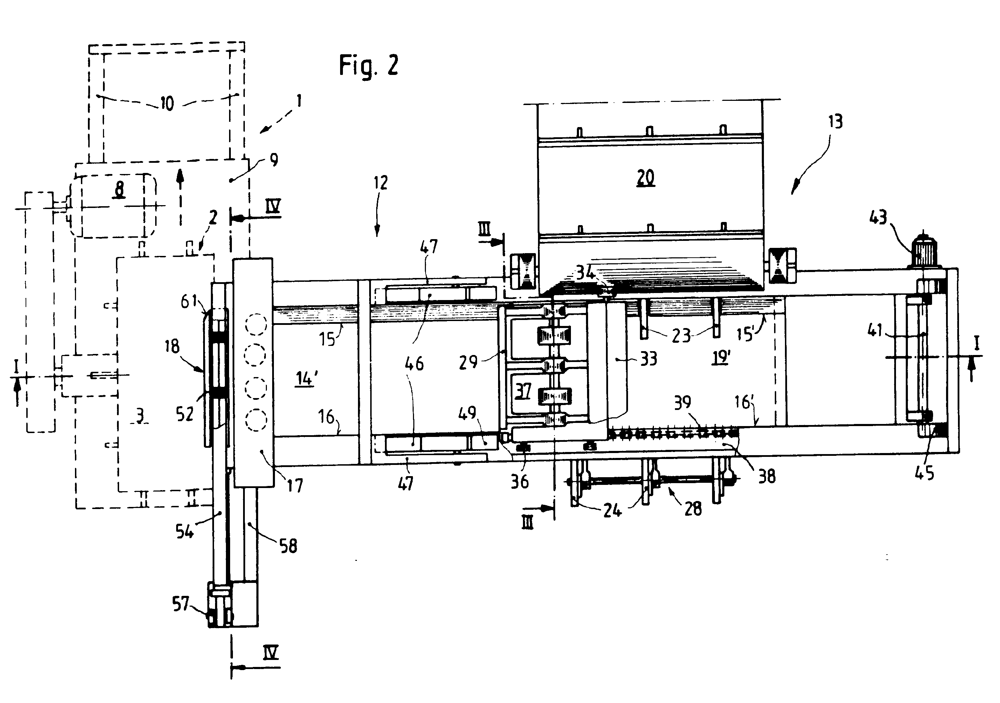

Die in den Figuren 1 und 2 gestrichelt angedeutete Zerspanstation 1 besteht im wesentlichen aus einer Zerspanmaschine 2, in deren Gehäuse 3 ein Messerrotor 4 fliegend gelagert ist und an dem die Zerspanmesser kranzförmig angeordnet sind. Dieser Messerkranz 5 umgibt eine Zerspankammer 6, in die von oben Andrückelemente 7 eingreifen. Die Zerspanmaschine 2 ist samt ihrem Antriebsmotor 8 auf einer Plattform 9 montiert, die auf Schienen 10 hin- und herbewegbar ist. Dabei wird bei der in Fig. 2 durch Pfeil angegebenen Bewegungsrichtung das jeweils in der Zerspankammer 6 befindliche Holz zerspant, wonach anschließend in entgegengesetzter Richtung die Zerspankammer 6 für den nächsten Beschickungstakt im Schnellgang wieder bereitgestellt wird. Das erzeugte homogene Spangut verläßt das Gehäuse 3 in Richtung auf ein Förderband 11, das es zur unmittelbaren industriellen Weiterverarbeitung abtransportiert.

Bei der in groben Umrissen geschilderten und nicht zur eigentlichen Erfindung gehörenden Zerspanmaschine 2 handelt es sich zwar um einen sogenannten Messerkranz-Zerspaner, doch ist die nachstehend beschriebene, erfindungsgemäß gestaltete Beschickvorrichtung auch für andere Gattungen von Zerspanmaschinen, wie Messerkopf- oder Messerscheiben-Zerspaner, brauchbar.

Die erfindungsgemäße Beschickvorrichtung besteht in ihrer Grundkonzeption aus einer Beschickstation 12 und einer Beladestation 13. Hauptbestandteil der Beschickstation 12 ist ein Rinnentrog 14, der mit seiner Bodenfläche 14' höhengleich in die Zerspankammer 6 der Zerspanmaschine 2 mündet und dessen Querschnittsprofil durch entsprechende Gestaltung seiner Seitenwände 15, 16 im wesentlichen dem Profil der geöffneten Zerspankammer 6 entspricht. Demgemäß weist die eine Seitenwand 15 mit Rücksicht auf den hier eingesetzten Messerkranz-Zerspaner 2 eine konvexe Wölbung auf, deren Krümmung dem Innenradius des Messerkranzes 5 entspricht. Oberhalb des Mündungsbereichs des Rinnentroges 14 ist ein von oben wirkendes Druckaggregat 17 vorgesehen, das während der einzelnen Zerspanungstakte den Holzstapel unmittelbar vor der Zerspankammer 6 von oben festklemmt. Ein weiterer Bestandteil der Beschickstation 12 ist ein Verschlußschieber 18, der von der Seite her zwischen den Rinnentrog 14 und die Zerspankammer 6 einschiebbar ist

4

und die Zerspankammer 6 beim jeweils letzten Zerspanungstakt verschließt.

Die unmittelbar hinter der Beschickstation 12 angeordnete Beladestation 13 besteht ihrerseits aus einem Lademagazin 19 und einem ihm zugeordneten Querförderer 20. Das Lademagazin 19 fluchtet querschnittsgleich mit dem Rinnentrog 14 und bildet demzufolge mit seinen Seitenwänden 15', 16' und seiner Bodenfläche 19' dessen rückwärtige Verlängerung. Rinnentrog 14 und Lademagazin 19 sind auf einem gemeinsamen Gestell 21 montiert.

In den Seitenwänden 15', 16' des Lademagazin 19 sind mehrere Schlitze 22 vorgesehen, in denen Dirigier- und Richtelemente 23, 24 in das Lademagazin 19 von der Seite her hineinbewegbar sind, um die vom Querförderer 20 in das Lademagazin 19 geförderten Stämme zu einem parallel ausgerichteten, dicht gepackten Holzstapel 25 zu formieren. Die Dirigier- und Richtelemente 23, 24 sind mittels Hydraulikaggregaten 26 über Steuergestänge 27, 28 betätigbar.

Im Rinnentrog 14 der Beschickstation 12 und im Lademagazin 19 der Beladestation 13 ist eine gemeinsame Schubplatte 29 längsverschiebbar, um den im Lademagazin 19 formierten Holzstapel 25 zunächst in den Rinnentrog 13 und von da aus dann taktweise in gleichmäßigen Abschnitten in die Zerspankammer 6 der Zerspanmaschine 2 zu schieben. Dabei sind, wie in der DE-PS 36 11 866 (US-PS 4 784 198) bereits näher erläutert, entsprechend der jeweils größten Länge eines Holzstapels Anzahl und Größe der einzelnen Vorschubtakte derart auf die Arbeitsbreite des Zerspaners abgestimmt, daß sich bei optimalem Füllungsgrad der Zerspankammer 6 gleichlange Zerspanungsabschnitte ergeben, wodurch das Entstehen von Restabschnitten beim jeweils letzten Zerspanungstakt eines Holzstapels vermieden wird.

In Fig. 1 ist die Schubplatte 29 in drei Stellungen dargestellt, und zwar in ihrer Schubstellung A sowie in Strichlinien in ihrer Rücklaufstellung B und in ihrer Mittelstellung C während des Umschwenkens. Die Schubplatte 29 ist an drei Armen 30 eines zweiarmigen Hebelsystems 31 befestigt, an dessen anderen Armen 32 ein Gegengewicht 33 sowie beidseitig davon ein Paar Steuerrollen 34 angeordnet sind. Das zweiarmige Hebelsystem 31 ist auf einer Schwenkachse 35 an einer im wesentlichen ebenen Platte gelagert, die zusammen mit seitlich angebrachten Laufrollen 36 einen Support 37 bildet, der in oberhalb des Rinnentroges 14 und des Lademagazins 19 verlaufenden Führungsrillen 38 hin- und herbewegbar ist. Die Führungsrillen 38 erstrecken sich durchgehend vom Rinnentrog 14 über das Lademagazin 19 hinaus. Die Hin- und Herbewegung des Supports 37 besorgt ein Kettentrieb, der aus zwei endlosen, synchron angetriebenen Kettenzügen 39 besteht, deren jeweils oberes Trum ebenfalls in den Führungsrillen 38 untergebracht ist, während ihr jeweils unteres Trum in Kettenrinnen 40 gleitet, die an den Innenseiten des Gestells 21 angebracht sind. Das Umlenken der beiden Kettenzüge 39 besorgen paarweise angeordnete Kettenräder 42, von denen ein Paar durch eine Verbindungswelle 41 drehfest miteinander verbunden und durch einen steuerbaren Getriebe- oder Hydraulikmotor 43 antreibbar ist.

Die Steuerrollen 34 der Schubplatte 29 wirken kurzzeitig mit stationären Steuerbahnen 44, 45 zusammen, die paarweise beidseits des Mündungsbereiches des Rinnentroges 14 und in einigem Abstand hinter dem Lademagazin 19 angeordnet sind. Die beiden dem Rinnentrog 14 zugeordneten Steuerbahnen 44 werden von der Unterseite je einer Steuerzunge 46 gebildet, die an der Innenseite von Seitenwangen 47 schwenkbar gelagert sind, die ihrer seits an den Seitenrändern des Rinnentroges 14 angebracht sind. Die Oberseite der beiden Steuerzungen 46 bilden Auflaufflächen 48 für die Steuerrollen 34, die bei der Vorwärtsbewegung der in Schubstellung A befindlichen Schubplatte 29 die Steuerzungen 46 soweit nach unten drücken, daß sie ungehindert in Einschubrichtung passieren können. Danach schwenken die Steuerzungen 46 unter der Wirkung eines an ihnen angebrachten Gegengewichtes 49 wieder in ihre durch einen an den beiden Seitenwangen 47 vorgesehenen Anschlag 50 festgelegte Ausgangslage zurück, so daß sie nach Beginn der Rücklaufbewegung den Steuerimpuls für das Schwenken der Schubplatte 29 in ihre Rücklaufstellung B bewirken können. Nach Zurückschwenken der Schubplatte 29 in ihre Rücklaufstellung B kommt einer der das Gegengewicht 33 tragenden Hebelarme 32 des zweiarmigen Hebelsystems 31 auf einem am Support 37 angebrachten elastischen Puffer 51 zur Anlage, auf dem er dann während des gesamten Rücklaufes der Schubplatte 29 liegen bleibt.

Die andere stationäre Steuerbahn 45 ist am entgegengesetzten Ende der Beschickvorrichtung mit einigem Abstand hinter dem Lademagazin 19 angebracht, um der Schubplatte 29 das Einschwenken in ihre Schubstellung A hinter den im Lademagazin 19 bereitgestellten Holzstapel 25 zu ermöglichen.

Der zwischen dem Mündungsende des Rinnentroges 14 und der Zerspankammer 6 vorgesehene Verschlußschieber 18 ist in den Figuren 1 und 2 im geschlossenen und in Fig. 4 im geöffneten Zustand dargestellt. Mit ihm kann die Zerspankammer 6 der Zerspanmaschine 2 nach Einschub des jeweils letzten Abschnittes eines Holzstapels verschlossen werden, so daß nach dem jeweils letzten Einschub die Schubplatte 29 sofort wieder im Schnellgang in ihre Startposition zurückgefahren werden kann, ohne daß zu befürchten ist, daß während der Restzerspanung Hölzer aus der Zerspankammer 6 in den Rinnentrog 14 zurückgedrückt werden, was zu Restabschnitten und somit zur Verschlechterung der Spanqualität führen würde.

Wie insbesondere aus Fig. 4 ersichtlich, ist der Verschlußschieber 18 von der Seite zwischen Rinnentrog 14 und Zerspankammer 6 einschiebbar. Hierzu ist er oben an Laufrollen 52 aufgehängt und unten in einer im Boden der Zerspankammer 6 vorgesehenen Rille 53 seitlich geführt. Die Laufrollen 52 laufen auf einer Laufschiene 54, die an einem am Gehäuse 3 der Zerspanmaschine 2 waagerecht angebrachten Flansch 55 befestigt ist. Demgemäß macht die Laufschiene 54 die Hin- und Herbewegungen der Zerspanmaschine 2 mit, während der daran verschiebbar aufgehängte Verschlußschieber 18 selbst in Ruhe bleibt. Betätigt wird der Verschlußschieber 18 von einem Hydrauliksystem 56, das sich auf ein Konsollager 57 abstützt, das seinerseits auf einem am Gestell 21 angebrachten Kragarm 58 befestigt ist. Nach Einschub des jeweils letzten Abschnittes eines Holzstapels verschließt der Verschlußschieber 18 sofort die Zerspankammer 6, während er bei den vorhergehenden Zerspanungstakten mit seinem verstärkten Stirnrand 60 als Druckelement fungiert, um den Holzstapel während der Zerspanungstakte unmittelbar vor der Zerspankammer im Zusammenwirken mit der gegenüberliegenden Seitenwand 15 des Rinnentroges 14 zusätzlich von der Seite her festzuhalten. Dementsprechend ist sein Stirnrand 60 in Anpassung an die gegenüberliegende konvex gewölbte Seitenwand 15 des Rinnentroges 14 konkav geformt. Außerdem ist der Stirnrand 60 mit einer zur Zerspankammer 6 weisenden Schrägfläche 61 versehen, um eine problemlose Schließbewegung des Verschlußschiebers 18 zu gewährleisten.

Schließlich dient der Verschlußschieber 18 im geschlossenen Zustand mit seinem Deckblech 59 als Anschlag für den in den Rinnentrog 14 neu eingeschobenen Holzstapel 25. Damit markiert er die Startposition der Schubplatte 29 für die gleichmäßigen Vorschubtakte und gibt zugleich das Startsignal für den Wiederanlauf des Querförderers 20.

Fig. 5 veranschaulicht das kinematische Wirkungsprinzip des Steuermechanismus für die Schwenkbewegungen der Schubplatte 29 aus ihrer Schubstellung A in ihre Rücklaufstellung B und umgekehrt. Erfindungsgemäß sind die Massen von Schubplatte 29 und Gegengewicht 33 derart bemessen und in bezug auf die Schwenkachse 35 des zweiarmigen Hebelsystems 31 angeordnet, daß in der Mittellage C der Schwenkbewegung sich der Gesamtschwerpunkt (Massenmittelpunkt) S des zweiarmigen Hebelsystems 31 genau oberhalb der Schwenkachse 35 befindet. In dieser Mittelstellung C nimmt demnach das zweiarmige Hebelsytem 31 eine labile Gleichgewichtslage ein, aus der die Schubplatte 29 dann von selbst in eine der beiden stabilen Lagen A oder B kippt, in denen der Schwerpunkt S die Lagen S' bzw. S" einnimmt. Zum Umsteuern der Schubplatte 29 braucht demzufolge nur die im Schwerpunkt S vereinigt gedachte Gesamtmasse des zweiarmigen Hebelsystems 31 durch die von den stationären Steuerbahnen 44, 45 auf die Steuerrollen 34 ausgeübten Steuerimpulse um die Höhendifferenz $\Delta h$ angehoben zu werden, wonach die Schubplatte 29 dann von selbst in ihre stabile Schubstellung A oder Rücklaufstellung B schwenkt.

Die erfindungsgemäß gestaltete Beschickvorrichtung arbeitet wie folgt:

Das in einheitlichen Transportlängen von etwa 2,50 m angelieferte Stammholz wird von nicht dargestellten Fördereinrichtungen dem Querförderer 20 zugeführt, der die Hölzer einzeln in das Lademagazin 19 befördert. Dort werden die Hölzer durch entsprechendes Betätigen der Dirigier- und Richtelemente 23, 24 zu kompakten, parallel ausgerichteten Holzstapeln 25 formiert. Sobald das Lademagazin 19 hinreichend befüllt ist, was z.B. durch eine elektronische Lichtschranke signalisiert werden kann, wird der Querförderer 20 stillgesetzt und die Dirigier- und Richtelemente 23, 24 ganz aus dem Lademagazin 19 herausbewegt. Inzwischen hat die Schubplatte 29 den letzten Abschnitt des vorangehenden Holzstapels in die Zerspankammer 6 eingeschoben, und sie ist, nachdem der Verschlußschieber 18 die Zerspankammer 6 verschlossen hat, unter Hochschwenken in ihre Rücklaufstellung B im Schnellgang in ihre Ausgangsposition hinter dem Lademagazin 19 zurückgekehrt.

Am Ende ihres Rücklaufes wird sie dann von den dortigen stationären Steuerbahnen 45 wieder in ihre Schubstellung A abgesenkt und erfaßt dann bei ihrer erneuten Vorwärtsbewegung den im Lademagazin 19 inzwischen bereitgestellten Holzstapel 25, den sie in den Rinnentrog 14 bis zum Anschlag seines vorderen Endes an dem noch in Schließstellung befindlichen Verschlußschieber 18 einschiebt. Der durch den Verschlußschieber 18 bewirkte Stop der Einschubbewegung markiert für die Schubplatte 29 die Ausgangsposition, von der aus sie nunmehr den Holzstapel 25 taktweise in gleichlangen Abschnitten in die Zerspankammer 6 einschiebt. Zugleich wird damit dem Querförderer 20 signalisiert, das Lademagazin 19 erneut zu befüllen.

Nach jedem abschnittsweisen Einschub des Holzstapels 25 in die Zerspankammer 6 werden die Hydrauliksysteme des von oben wirkenden Druckaggregates 17 sowie des von der Seite drückenden Verschlußschiebers 18 aktiviert, und nach Erreichen eines vorbestimmten Anpreßdruckes wird die Zerspanmaschine 2 dann in der aus Fig. 2 ersichtlichen Pfeilrichtung in Bewegung gesetzt, wobei der ständig rotierende Messerkranz 5 den jeweils in der Zerspankammer 6 befindlichen Holzabschnitt zerspant. Danach wird die Zerspanmaschine 2 im Eilgang wieder in ihre Ausgangslage zurückgefahren und nach Entspannen des Druckaggregates 17 und des Verschlußschiebers 18 die Zerspankammer 6 erneut beschickt. Nach Einschub des letzten Abschnittes des Holzstapels wird der Verschlußschieber 18 dann vor die Zerspankammer 6 geschoben und zugleich die Schubplatte 29 sofort unter Hochschwenken in ihre Rücklaufstellung B im Eilgang in ihre Startposition zurückgefahren. Während der Zerspanung eines Holzstapels 25 wird das Lademagazin 19 mit dem nächsten Holzstapel erneut gefüllt, so daß der Arbeitszyklus in der beschriebenen Weise von neuem beginnen kann.

Wie bereits erwähnt, ist die Funktionsweise der erfindungsgemäß gestalteten Beschickvorrichtung unabhängig davon, welche Gattung von Zerspanmaschinen mit ihr beschickt wird. Anstelle des hier beschriebenen Messerkranz-Zerspaners kann daher auch ein Messerkopf-Zerspaner oder ein Messerscheiben-Zerspaner treten, wobei lediglich bei letzterem die Schubplatte 29 und der Verschlußschieber 18 eine dem Radius der Messerscheibe entsprechende konkave Wölbung aufweisen müssen.

Bezugszeichen-Verzeichnis

| 1 | Zerspanstation | 33 | Gegengewicht |
|---|---|---|---|
| 2 | Zerspanmschine | 34 | Steuerrollen |
| 3 | Gehäuse dazu | 35 | Schwenkachse |
| 4 | Messerrotor | 36 | Laufrollen für |
| 5 | Messerkranz | 37 | Support |
| 6 | Zerspankammer | 38 | Führungsrillen |
| 7 | Andrückelemente | 39 | Kettenzüge |
| 8 | Antriebsmotor | 40 | Kettenrinne |
| 9 | Plattform | 41 | Verbindungswelle |
| 10 | Schienen | 42 | Kettenräder |
| 11 | Förderband | 43 | Getriebemotor |
| 12 | Beschickstation | 44 } Stationäre |
| 13 | Beladestation | 45 } Steuerbahnen |
| 14 | Rinnentrog | 46 | Steuerzunge |
| 14' | Boden des Rinnentroges | 47 | Seitenwangen |
| 15 } Seitenwände des | | 48 | Auflauffläche |
| 16 } Rinnentroges | | 49 | Gegengewicht |
| 15' } Seitenwände des | | 50 | Anschlag |
| 16' } Lademagazins | | 51 | Auflagepuffer |
| 17 | Druckaggregat | 52 | Laufrollen f. Verschl.schieber |
| 18 | Verschlußschieber | 53 | Bodenrille |
| 19 | Lademagazin | 54 | Laufschiene |
| 19' | Boden des Lademagazins | 55 | Gehäuseflansch |
| 20 | Querförderer | 56 | Hydrauliksystem |
| 21 | Gestell | 57 | Konsollager |
| 22 | Wandschlitze | 58 | Kragarm |
| 23 } Dirigier- und | | 59 | Deckblech |
| 24 } Richtelemente | | 60 | Stirnrand |
| 25 | Holzstapel | 61 | Schrägfläche |
| 26 | Hydraulikaggregate | | |
| 27 } Steuergestänge | | A | Schubplatte in Schubstellung |
| 28 } dazu | | B | Schubplatte in Rücklaufstellung |
| 29 | Schubplatte | C | Schubplatte in Schwenkstellung |
| 30 | vordere Hebelarme | S | Schwerpunkt des Hebelsystems |
| 31 | Zweiarmiges Hebelsystem | $\alpha$ | Schwenkwinkel |
| 32 | Hintere Hebelarme | a | Abstand des Schwerpunktes von der Schwenkachse |

**Patentansprüche**

1. Vorrichtung zum kontinuierlichen Beschicken von Zerspanmaschinen mit zu Stapeln formiertem Stückholz, insbesondere Rundholz, das im wesentlichen gleichmäßig lang ist, bestehend aus einem in die Zerspankammer von Zerspanmaschinen mündenden Rinnentrog, in dem eine Schubplatte die in einem Lademagazin formierten Holzstapel taktweise in gleich langen Abschnitten in die Zerspankammer einschiebt, wobei das Lademagazin höhengleich hinter dem Rinnentrog als dessen rückwärtige Verlängerung angeordnet ist, dadurch gekennzeichnet, daß die Schubplatte (29) bistabil auf einem Support schwenkbar gelagert ist, der unmittelbar über den Rinnentrog (14) und das Lademagazin (19) hinweg, parallel zu deren Bodenflächen (14', 19') hin- und herbewegbar ist, wobei die Schubplatte mit mindestens einem Steuerglied (34) versehen ist, das im Zusammenwirken mit stationären Steuerbahnen (44, 45) nur im Anfangs- und Endbereich ihres Rücklaufes kurzzeitige Steuerimpulse auf diese ausübt, um sie jeweils in ihre autogen-stabile Rücklaufstellung (B) bzw. Schubstellung (A) zu schwenken.

2. Vorrichtung nach Anspruch 1, dadurch gekennzeichnet, daß die Schubplatte (29) an den Armen (30) eines am Support (37) schwenkbar gelagerten zweiarmigen Hebelsystems (31) befestigt ist, an dessen anderen Armen (32) ein Gegengegewicht (33) sowie das Steuerglied (34) angeordnet sind.

3. Vorrichtung nach Anspruch 2, dadurch gekennzeichnet, daß Masse und Anordnung von Schubplatte (29) und Gegengewicht (33) derart aufeinander abgestimmt sind, daß das zweiarmige Hebelsystem (31) in der Mittellage (C) seines Schwenkwinkels ($\alpha$) sich im labilen Gleichgewicht befindet.

4. Vorrichtung nach Anspruch 3, dadurch gekennzeichnet, daß die ortsfesten Steuerbahnen (44, 45) seitlich des Mündungsbereiches des Rinnentroges (14) sowie mit Abstand hinter dem Lademagazin (19) angeordnet sind, wobei die am Rinnentrog befindliche Steuerbahn (44) von oben und die hinter dem Lademagazin angeordnete Steuerbahn (45) von unten auf das Steuerglied (34) wirken.

5. Vorrichtung nach Anspruch 4, dadurch gekennzeichnet, daß die am Rinnentrog (14) befindliche Steuerbahn (44) von der Unterseite einer schwenkbar gelagerten, unter der Wirkung einer Rückstellkraft (49) stehenden Steuerzunge (46) gebildet ist.

6. Vorrichtung nach Anspruch 2, dadurch gekennzeichnet, daß das Steuerglied für die Schubplatte (29) aus einer Rolle (34) besteht, die seitlich am Gegengewicht (33) gelagert ist.

7. Vorrichtung nach Anspruch 1, dadurch gekennzeichnet, daß der Support (37) mittels seitlich angebrachter Laufrollen (36) in beidseits des Rinnentroges (14) und des Lademagazins (19) durchgehend vorgesehenen Führungsrillen (38) kippsicher gelagert ist und von darin untergebrachten, synchron angetriebenen Kettenzügen (39) bewegbar ist.

8. Vorrichtung nach Anspruch 1, dadurch gekennzeichnet, daß zwischen dem Mündungsende des Rinnentroges (14) und der Zerspankammer (6) der Zerspanungsmaschine (2) ein quer zum Rinnentrog bewegbarer Verschlußschieber (18) vorgesehen ist.

9. Vorrichtung nach Anspruch 8, dadurch gekennzeichnet, daß der Verschlußschieber (18) an seinem dem Rinnentrog (14) zugekehrten Rand (60) verstärkt und mit einer zur Zerspankammer (6) weisenden Schrägfläche (61) versehen ist.

10. Vorrichtung nach Anspruch 9, dadurch gekennzeichnet, daß der Verschlußschieber (18) von der Seite her zwischen den Rinnentrog (14) und die Zerspankammer (6) einschiebbar ist, wobei sein verstärkter Rand (60) konkav gewölbt ist.

**Claims**

1. Device for the continuous feeding of flakers with wood pieces formed to piles, especially of round wood, having approx. the same length, consisting of a trough opening into the flaking chamber of flakers and in which a pushing plate pushes the wood pile formed in a loading magazine in sections of equal length into the flaking chamber whereby the loading magazine is placed behind the trough at the same height as its rear prolongation and wherein the pushing plate (29) is swivelling bistable on a support which is movable forwards and backwards just above the trough (14) and the loading magazine (19) parallel to their bottom surfaces (14', 19') and whereby the pushing plate is provided with at least one control element (34) which in combined action with the stationary guide rails (44, 45) emits short-time control impulses to the pushing plate only in the beginning and end area of its return motion to swivell it in its autogenous stable return motion position (B) or resp. in its pushing position (A).

2. Device as claimed in claim 1, wherein said pushing plate (29) is attached onto the two arms (30) of a lever system (31) swivelling on the support (37) and on which other arms (32) a counterweight (33) and the control element (34) are arranged.

3. Device as claimed in claim 2, wherein the mass and arrangement of the pushing plate (29) and the counterweight (33) are designed so that, in the mean position (C) of its pivoting angle ($\alpha$), the two-arm lever system (31) is in unstable balance.

4. Device as claimed in claim 3, wherein the fixed guide rails (44, 45) are located at the side of the opening area of the trough (14) as well as in some distance behind the loading magazine (19) whereby the guide rail (44) at the trough is acting from above and the guide rail (45) behind the loading magazine is acting from below onto the control element (34).

5. Device as claimed in claim 4, wherein the guide rail (44) at the trough (14) is made of the underside of a pivoting guiding tongue (46) subject to a restoring force (49).

6. Device according to claim 2, wherein the control element for the pushing plate (29) consists of a roll (34) fastened at the side of the counterweight (33).

7. Device according to claim 1, wherein the support (37) runs without risk of tilting in continuous guiding grooves (38) provided on both sides of the trough (14) and the loading magazine (19) by means of lateral rollers (36) and wherein it can be moved by synchronously driven chains (39).

8. Device according to claim 1, wherein a slide gate (18) movable transversally to the trough has been provided between the opening end of the trough (14) and the flaking chamber (6) of the flaker (2).

9. Device according to claim 8, wherein the slide gate (18) is reinforced on its edge (60) showing towards the trough (14) and provided with a slanted surface (61) on its face showing towards the flaking chamber (6).

10. Device according to claim 9, wherein the slide gate (18) can be slid between trough (14) and flaking chamber (6) from the side and wherein its reinforced edge (60) is dished.

## Revendications

1. Dispositif permettant l'alimentation continue de déchiqueteurs avec des morceaux de bois, en particulier des rondins, ayant pratiquement la même longueur sous forme de piles et constitué d'une auge débouchant dans la chambre de déchiquetage de déchiqueteurs et dans laquelle une plaque de poussée pousse en plusieurs étapes de longueurs égales la pile de bois formée dans le magasin de chargement dans la chambre de déchiquetage. Le magasin de chargement est situé à l'arrière de l'auge à hauteur égale et en forme le prolongement arrière. Le dispositif est caractérisé en ce que la plaque de poussée (29) est fixée bistable sur un support de telle sorte qu'elle puisse pivoter, lequel support pouvant être mû en avant et en arrière par dessus l'auge (14) et le magasin de chargement parallèlement à leur fonds (14', 19'). La plaque de poussée est pourvue d'au moins un organe de manoeuvre (34) émettant, avec le concours des rails de guidage fixes (44, 45) de brèves impulsions de commande sur la plaque au début et à la fin de sa course arriére afin de la faire pivoter dans sa position autogéne stable de retour (B) resp. dans sa position de poussée (A).

2. Dispositif selon la revendication 1 caractérisé en ce que la plaque de poussée (29) est fixée aux deux bras (30) d'un système de leviers (31) pivotant sur le support (37) et sur les autres bras (32) duquel sont placés un contrepoids (33) ainsi que l'organe de manoeuvre (34).

3. Dispositif selon la revendication 2 caractérisé en ce que la masse et la disposition de la plaque de poussée (29) et du contre-poids (33) sont adaptées l'une à l'autre de telle sorte que le système de leviers (31) à deux bras soit en équilibre instable en position médiane (C) de son angle de pivotement (α).

4. Dispositif selon la revendication 3 caractérisé en ce que les rails de guidage (44, 45) fixes sont placés sur les cotés de la zone d'embouchure de l'auge (14) ainsi qu'avec un écart derrière le magasin de chargement (19). Le rail de guidage (44) au niveau de l'auge agit par le haut et le rail de guidage (45) derrière le magasin de chargement agit par le bas sur l'organe de manoeuvre (34).

5. Dispositif selon la revendication 4 caractérisé en ce que le rail de guidage (44) au coté de l'auge (14) est formé par la face inférieure d'une langue de guidage (46) pivotante sur laquelle agit une force de rappel (49).

6. Dispositif selon la revendication 2 caractérisé en ce que l'organe de manoeuvre pour la plaque de poussée (29) est constitué d'un rouleau (34) logé latéralement dans le contre-poids (33).

7. Dispositif selon la revendication 1 caractérisé en ce que le support (37) est logé de telle sorte qu'il ne puisse pas basculer grâce à des rouleaux (36) montés latéralement dans des canaux de guidage (38) continus des deux cotés de l'auge (14) et du magasin de chargement et en ce que le support est mû par des chaines (39) à entrainement synchronisé également placées dans ces canaux.

8. Dispositif selon la revendication 1 caractérisé en ce qu'une coulisse obturatrice (18) pouvant être mûe perpendiculairement par rapport à l'auge est prévue entre l'extrémité de l'auge (14) débouchant sur la chambre de déchiquetage (6) du déchiqueteur (2) et celle-ci.

9. Dispositif selon la revendication 8 caractérisé en ce que la coulisse obturatrice (18) est renforcée sur le bord (60) orienté vers l'auge (14) et pourvue d'une surface inclinée (61) orientée vers la chambre de déchiquetage (6).

10. Dispositif selon la revendication 9 caractérisée en ce que la coulisse obturatrice (18) peut être glissée entre l'auge (14) et la chambre de déchiquetage (6) de coté et en ce que son bord renforçé (60) a une forme concave.

Fig. 1

Fig. 5

Fig. 2

EP 0 407 885 B1

## Fig. 3

## Fig. 4